# FASCICULE DE BREVET EUROPEEN

(11) **EP 3 187 826 B1**
(45) Date de publication et mention de la délivrance du brevet: **23.10.2019**
(21) Numéro de dépôt: 16204978.7
(22) Date de dépôt: 19.12.2016
(51) Int. Cl.: G01C 23/00, G08G 5/00, G09B 29/00

(54) **AFFICHAGE DE DONNEES METEOROLOGIQUES DANS UN AERONEF**
ANZEIGE VON METEOROLOGISCHEN DATEN IN EINEM LUFTFAHRZEUG
DISPLAY OF METEOROLOGICAL DATA IN AN AIRCRAFT

(30) Priorité: 29.12.2015 FR 1502715
(43) Date de publication de la demande: 05.07.2017
(73) Titulaire: Thales, 92400 Courbevoie (FR)
(72) Inventeur: FOURNIER, François, 31036 Toulouse Cedex (FR); PANCHOUT, Frédéric, 31036 Toulouse Cedex (FR); CORNILLON, Mathieu, 31036 Toulouse Cedex (FR)
(74) Mandataire: Hnich-Gasri, Naïma

(56) Documents cités:
- EP-A1- 2 463 846
- GB-A- 2 488 916
- US-A- 5 265 024
- US-A1- 2008 022 217
- US-A1- 2010 057 275
- US-A1- 2011 022 294
- US-A1- 2015 142 224
- US-B1- 7 612 688
- US-B1- 9 020 665
- Weather Underground: "WunderMap iOS Demo", , 11 juillet 2013 (2013-07-11), pages 1-2, XP054976908, Extrait de l'Internet: URL:https://www.youtube.com/watch?v=quE6eb 58oJ4 [extrait le 2016-11-11]
- Weather Underground: "WunderMap for iOS7", , 25 février 2014 (2014-02-25), pages 1-2, XP054976909, Extrait de l'Internet: URL:https://www.youtube.com/watch?v=Xreowd ttc4U [extrait le 2016-11-11]

## Description

### Domaine de l'invention

L'invention concerne le domaine technique de la gestion de données météorologiques dans le cadre de l'aide à la navigation d'un moyen de transport tel qu'un aéronef.

### État de la technique

Les informations météorologiques sont essentielles pour l'aide à la navigation d'un aéronef, lequel se déplace rapidement dans des conditions atmosphériques variées et évolutives.

Les informations météorologiques influencent la préparation opérationnelle des missions ainsi que les décisions en cours de vol. Les événements météorologiques décisifs comprennent notamment les mouvements atmosphériques (e.g. vent, tempête, convection, turbulences, etc.), les formations hydrométéorologiques (e.g. pluie, neige, brouillard, etc.), la présence de givre, les conditions de visibilité faible ou réduite, et les phénomènes électrique (éclairs).

Les données météorologiques sont généralement fournies sous forme textuelle et/ou graphique. En ce qui concerne les données météorologiques de type graphique, elles sont généralement affichées sous forme de symboles, lesquels sont superposés sur un ou plusieurs fonds ou calques cartographiques.

Différentes options d'affichage sont généralement offertes au pilote pour naviguer efficacement au sein des données météorologiques. Ces options comprennent notamment la possibilité de sélectionner ou de filtrer un ou plusieurs critères associés à un type d'événement météorologique particulier, la possibilité de sélectionner ou de manipuler des calques d'affichage, de choisir ou de bénéficier de l'emploi de codes couleurs afin d'indiquer des risques ou priorités éventuelles, de gérer la transparence des différents symboles affichés à l'écran, etc.

Le document de brevet US2008022217 divulgue un procédé de gestion de l'affichage d'informations de superposition dans une ou plusieurs vues. Il est notamment déterminé si un élément de superposition disponible correspond à un type d'élément sélectionné.

Le document de brevet US2010057275 divulgue une méthode pour présenter des informations météorologiques. La méthode comprend la sélection d'une géométrie présentant un niveau de transparence dans une bordure permettant d'identifier une autre géométrie lorsqu'elle est affichée de manière superposée.

Le document de brevet US5265024 divulgue un système et un procédé permettant de fournir des informations météorologiques au pilote d'un aéronef. Les représentations sont de type carte et dans un format alphanumérique qui sont adaptés aux besoins opérationnels du pilote.

Le document de brevet EP2463846 divulgue des procédés et des systèmes pour l'intégration dans un affichage cartographique d'informations météorologiques textuelles, géocodées et codées dans temps. La symbologie météorologique proposée comprend des pictogrammes météorologiques qui relient les conditions météorologiques passées, actuelles et futures aux emplacements géographiques correspondants au contexte temporel de l'affichage de la carte graphique.

Malgré tout, ces approches présentent des limitations.
Les techniques contemporaines de représentation et d'affichage de données aboutissent parfois à un empilement de données qui les rend illisibles. Quand le pilote tente de visualiser plusieurs types de données météorologiques simultanément, il peut être submergé d'informations (symboles, lignes, textes, couleurs) et par suite perdre de sa capacité d'analyse. Une mauvaise lisibilité et/ou des options insatisfaisantes de navigation dans les données impactent parfois très défavorablement les prises de décision par le pilote. La sûreté du vol de l'aéronef peut en être compromise, puisque les conditions météorologiques font partie des informations les plus critiques pour la gestion de vol et le pilotage d'un aéronef.

Il existe un besoin opérationnel pour des systèmes et des méthodes avancées de gestion des données météorologiques au sein des cockpits des aéronefs.

### Résumé de l'invention

Il est divulgué un procédé mis en œuvre par ordinateur de gestion de l'information météorologique pour la gestion du vol d'un aéronef, comprenant les étapes consistant à recevoir un fond cartographique et des sélections de produits météorologiques ; recevoir des données météorologiques associées au plan de vol de l'aéronef, selon une première échelle d'espace; déterminer un ou plusieurs types de symboles graphiques; en fonction d'une seconde échelle d'espace, déterminer une ou plusieurs déclinaisons graphiques des types de symboles graphiques, les superpositions graphiques étant prédéfinies; et afficher le fond cartographique et les déclinaisons graphiques déterminées. Des développements décrivent des ajustements de l'affichage notamment en fonction de la densité visuelle de l'affichage, la prise en compte du contexte de vol et/ou de la physiologie du pilote, la désactivation sur requête des ajustements de l'affichage. Des aspects de logiciel et de système (e.g. sac de vol électronique, suivi du regard) sont également décrits. Avantageusement, un mode de réalisation de l'invention permet l'affichage de plusieurs produits météorologiques de manière simultanée, en permettant de distinguer les différents produits entre eux

Avantageusement, un mode de réalisation de l'invention permet de créer ou de maintenir un lien entre un produit météorologique et sa criticité

Avantageusement, l'invention améliore les prises de décision du pilote, en permettant notamment d'améliorer la lisibilité des informations affichées, et ce de manière mesurable.

Avantageusement, les exemples décrits facilitent les interactions homme-machine et en particulier déchargent le pilote de manipulations fastidieuses d'accès à l'information météorologique, parfois répétitives et souvent complexes, améliorant du même coup sa capacité de concentration pour le pilotage proprement dit. Améliorant le modèle d'interaction homme-machine, le champ visuel du pilote peut être utilisé au mieux et de manière plus intensive, permettant de maintenir un niveau d'attention élevé ou exploiter ce dernier au mieux. L'effort cognitif à fournir se trouve optimisé, ou plus exactement partiellement réalloué à des tâches cognitives plus utiles au regard de l'objectif de gestion de vol et de pilotage. En d'autres termes, les effets techniques liés à certains aspects de l'invention correspondent à une réduction de la charge cognitive de l'utilisateur de l'interface homme- machine.

Avantageusement, un mode de réalisation avantageux de la symbologie permet de réduire les coûts de formation ou d'apprentissage, en bénéficiant de l'héritage et de la synthèse de symboles standards et normés.

Avantageusement, l'invention permet d'assister le pilote afin de prédéterminer des informations contextuellement utiles.

Avantageusement l'invention permet de restituer simultanément à l'écran les aspects de « criticité » (importance qualitative) et de la « sévérité » (importance quantitative) des événements météorologiques. Dans le domaine de la sûreté de fonctionnement ou de la gestion de la qualité, la "criticité" est définie comme le produit de la probabilité d'occurrence d'un accident par la gravité ou la sévérité de ses conséquences ("criticité = probabilité × gravité"). La criticité d'un événement météorologique dépend à la fois de la fréquence ou de sa probabilité d'apparition, de sa gravité et vise généralement à évaluer et prévenir les risques de réaction en chaîne non désirée (risques systémiques).

Avantageusement, l'invention peut s'appliquer dans le contexte avionique ou aéronautique (y compris le télé-pilotage de drone) mais aussi dans les contextes automobile, de transport ferroviaire ou maritime.

### Description des figures

D'autres caractéristiques et avantages de l'invention apparaîtront à l'aide de la description qui suit et des figures des dessins annexés dans lesquels:
La figure 1 illustre l'environnement technique global de l'invention;
La figure 2 illustre schématiquement la structure et les fonctions d'un système de gestion de vol de type FMS connu;
La figure 3 montre un exemple d'un type de symbole selon un mode de réalisation de l'invention ;
La figure 4 montre des exemples de déclinaisons graphiques d'un type de symbole donné ;
Les figures 5 et 6 illustrent des exemples d'ajustement de l'affichage selon un mode de réalisation de l'invention ;
La figure 7 montre des exemples d'étapes du procédé selon l'invention ;
La figure 8 montre un exemple de sélection d'une pluralité de produits météorologiques ;
La figure 9 illustre des aspects de système de la mesure de la densité visuelle ;
La figure 10 illustre différents aspects relatifs aux interfaces homme-machine IHM.

### Description détaillée de l'invention

L'invention peut être mise en œuvre sur un ou plusieurs EFB "Electronic Flight Bag" et/ou sur un/ou plusieurs écrans du FMS "Flight Management System" et/ou sur un/ou plusieurs écrans du CDS « Cockpit Display System ». L'affichage peut être « distribué » sur ces différents écrans d'affichage.

Un "Electronic Flight Bag", d'acronyme ou sigle EFB, correspond désigne des librairies électroniques embarquées. Généralement traduit par "sac de vol électronique" ou "sacoche de vol électronique" ou "tablette de vol électronique", un EFB est un appareil électronique utilisé par le personnel navigant (par exemple pilotes, maintenance, cabine..). Un EFB peut fournir des informations de vol à l'équipage, aidant celui-ci à effectuer des tâches (avec de moins en moins de papier). Une ou plusieurs applications permettent la gestion de l'information pour des tâches de gestion de vol. Ces plateformes informatiques d'usage général sont destinées à réduire ou remplacer le matériel de référence sous forme papier, souvent trouvés dans le bagage à main du "Pilot Flight Bag" et dont la manipulation peut être fastidieuse, notamment lors de phases de vol critiques. La documentation papier de référence comprend généralement les manuels de pilotage, les différentes cartes de navigation et les manuels d'opérations au sol. Ces documentations sont avantageusement dématérialisées dans un EFB. En outre, un EFB peut héberger des applications logicielles spécialement conçues pour automatiser des opérations conduites manuellement en temps normal, comme par exemple les calculs de performances de décollage (calcul de vitesses limites, etc). Différentes classes de matériel EFB existent. Les EFB de classe 1 sont des appareils électroniques portatifs (PED), qui ne sont normalement pas utilisés durant le décollage et d'autres phases critiques. Cette classe d'appareil ne nécessite pas un processus administratif de certification ou d'autorisation particulière. Les appareils EFB de classe 2 sont normalement disposés dans le cockpit, e.g. montés dans une position où ils sont utilisés durant toutes les phases de vol. Cette classe d'appareils nécessite une autorisation d'utilisation préalable. Les appareils de classe 1 et 2 sont considérés comme des appareils électroniques portatifs. Des installations fixes de classe 3, telles que des supports informatiques ou des stations d'accueil fixes installées dans le cockpit des aéronefs exigent généralement l'approbation et une certification de la part du régulateur.

Comme tout appareil d'affichage, la quantité d'information à afficher sur un EFB peut rencontrer des limites (notamment en ce qui concerne l'affichage de données météo) et il est avantageux d'implémenter des procédés optimisant l'affichage de données.

En complément, ou alternativement, à l'affichage sur un ou plusieurs EFB, des données peuvent être affichés sur un ou plusieurs écrans du FMS affichés dans le cockpit de l'aéronef. L'acronyme ou sigle FMS correspond à la terminologie anglaise "Flight Management System" et désigne les systèmes de gestion de vol des aéronefs. Lors de la préparation d'un vol ou lors d'un déroutement, l'équipage procède à la saisie de différentes informations relatives au déroulement du vol, typiquement en utilisant un dispositif de gestion de vol d'un aéronef FMS. Un FMS comprend des moyens de saisie et des moyens d'affichage, ainsi que des moyens de calcul. Un opérateur, par exemple le pilote ou le copilote, peut saisir via les moyens de saisie des informations telles que des RTA (*Required Time of Arrival*), ou *" waypoints* ", associés à des points de cheminement, c'est-à-dire des points à la verticale desquels l'aéronef doit passer. Ces éléments sont connus dans l'état de l'art par la norme internationale ARINC 424. Les moyens de calcul permettent notamment de calculer, à partir du plan de vol comprenant la liste des *waypoints,* la trajectoire de l'aéronef, en fonction de la géométrie entre les *waypoints* et/ou des conditions d'altitude et de vitesse.

Dans la suite du document, l'acronyme anglais FMD est utilisé pour désigner l'affichage du FMS présent dans le cockpit, disposé en général en tête basse (au niveau inférieur de la planche de bord).

L'acronyme anglais ND est utilisé pour désigner l'affichage graphique du FMS présent dans le cockpit, disposé en général en tête moyenne, soit devant le visage. Cet affichage est défini par un point de référence (centré ou en bas de l'affichage) et un range, définissant la taille de la zone d'affichage.

L'acronyme IHM correspond à Interface Homme-Machine (HMI en anglais, Human Machine Interface). La saisie des informations, et l'affichage des informations saisies ou calculées par les moyens d'affichage, constituent une telle interface homme-machine. De manière générale, les moyens IHM permettent la saisie et la consultation des informations de plan de vol. Les modes de réalisation décrits ci-après détaillent des systèmes IHM avancés.

Différents modes de réalisation sont décrits ci-après.

Il est divulgué un procédé mis en œuvre par ordinateur de gestion de l'information météorologique pour la gestion du vol d'un aéronef, comprenant les étapes consistant à recevoir un fond cartographique parmi plusieurs fonds cartographiques prédéfinis ; recevoir une pluralité de sélections de produits météorologiques ; recevoir des données météorologiques associées au plan de vol de l'aéronef, selon une première échelle d'espace; déterminer un ou plusieurs types de symboles graphiques en fonction des produits météorologiques sélectionnés et des données météorologiques reçues ; et en fonction d'une seconde échelle d'espace, déterminer une ou plusieurs déclinaisons graphiques des types de symboles graphiques, les superpositions graphiques desdites déclinaisons des types de symboles étant prédéfinies; afficher le fond cartographique et les déclinaisons graphiques déterminées.

Les superpositions graphiques des déclinaisons des types de symboles sont prédéfinies de manière combinatoire: le procédé sélectionne la meilleure option graphique parmi les possibles, en matière de lisibilité a priori.

Une échelle d'espace correspond aux dimensions d'une cellule d'espace (généralement en km² ou miles nautiques carrés), correspondant par exemple au format des données météorologiques de nature réglementaire. L'invention permet des « agrandissements » ou « zoom (avant)», respectivement des « réductions » ou « simplifications » ou « zoom arrière », avec ou sans modification de la densité visuelle. Dans un mode de réalisation, le contenu est adapté à l'échelle d'affichage sélectionnée.

Dans un mode de réalisation, le pilote sélectionne manuellement l'échelle d'affichage (e.g. le niveau de zoom ou d'agrandissement): la seconde échelle d'espace est reçue du pilote et/ou d'un fichier de configuration (intervention d'une machine tierce).

Selon l'invention, le procédé comprend en outre une étape consistant à mesurer la densité visuelle de l'affichage comprenant le fond cartographique et les symboles graphiques et une étape consistant à ajuster ledit affichage en fonction de la densité visuelle mesurée.

Dans un mode de réalisation, l'échelle d'affichage est déterminée automatiquement. Dans un mode de réalisation, l'échelle d'affichage appropriée est déterminée en fonction de la lisibilité (notion psychométrique) ramenée à la mesure de densité visuelle affichée.

La densité d'affichage peut notamment déterminée par une mesure intrinsèque (e.g. nombre de pixels par unité de surface) et/ou par une mesure extrinsèque (e.g. moyens d'acquisition d'images externes)

L'étape de mesure de la densité visuelle et l'étape d'ajustement sont indépendantes dans le temps : les étapes peuvent être effectuées successivement ou en parallèle, i.e. avec ou sans correction d'un premier affichage non-optimisé (lequel peut d'ailleurs être caché au pilote). Dans un mode de réalisation, les optimisations sont effectuées en amont (la mesure de la densité visuelle est intrinsèque) et le résultat final est affiché. Dans un mode de réalisation, la mesure de la densité visuelle extrinsèque est constatée, puis corrigée.

Dans un développement, le procédé comprend en outre une étape consistant à déterminer le contexte de vol courant de l'aéronef et la pluralité de sélections de produits météorologiques étant déterminée en fonction dudit contexte de vol courant de l'aéronef.

Dans un développement, les superpositions graphiques des déclinaisons des types de symboles sont associées à des scores visuels prédéfinis et l'étape consistant à déterminer une ou plusieurs déclinaisons graphiques des types de symboles graphiques comprenant l'étape consistant à maximiser la somme des scores associés aux superpositions des déclinaisons graphiques déterminées.

La capacité (ou propriété) de superposition des différents symboles invocables peut être quantifiée (objectivement par mesure de densité visuelle ou subjectivement par des évaluations préalables). La « superposabilité » des symboles est donc configurable. Le contrôle du score (« ranking ») permet donc par exemple de moduler le rendu de l'affichage.

Dans un développement, l'étape consistant à ajuster l'affichage comprend une étape consistant à modifier le type et/ou le nombre de symboles graphiques.

Les déclinaisons des types de symboles selon l'invention sont superposables par construction. Dans un développement, des informations quantitatives sont encodées de manière graphique (e.g. épaisseur des traits composant le symbole ou sa déclinaison, couleur, etc). Par information quantitative il est entendu la fréquence ou la quantité du produit météorologique concerné par exemple.

Dans un développement, l'étape consistant à ajuster l'affichage comprend les étapes consistant à éliminer et/ou à superposer un ou plusieurs types ou déclinaisons graphiques des symboles affichés.

Dans un développement, le procédé comprend en outre une étape consistant à recevoir au moins une valeur associée à l'état physiologique du pilote de l'aéronef et à déterminer une ou plusieurs déclinaisons graphiques des types de symboles graphiques et/ou ajuster l'affichage en fonction de l'état physiologique du pilote.

Dans un développement, l'ajustement de l'affichage est désactivé sur requête.

Le zoom automatique et/ou les manipulations sur les symboles graphiques peuvent être annulées ou désactivées ou inversé sur demande du pilote et/ou sur requête d'un système avionique (mode dit débrayable, utile par exemple en cas d'urgence pour enlever les surcouches graphiques non essentielles).

Il est divulgué un produit programme d'ordinateur, comprenant des instructions de code permettant d'effectuer les étapes du procédé, lorsque ledit programme est exécuté sur un ordinateur.

Il est divulgué un système comprenant des moyens pour mettre en œuvre les étapes du procédé.

Dans un développement, le système comprend au moins un écran d'affichage choisi parmi un écran de vol PFD et/ou un écran de navigation ND/VD et/ou un écran multifonction MFD et/ou un ou plusieurs écrans d'affichage d'un sac de vol électronique ou Electronic Flight Bag.

Dans un développement, le système comprend des moyens d'acquisition d'images d'un ou de plusieurs écrans d'affichage.

Dans un développement, le système comprend (en complément ou en substitution) des moyens de surveillance de la physiologie du pilote de l'aéronef.

Dans un développement, le système comprend (en complément ou en substitution) un dispositif de suivi du regard du pilote.

Dans un développement, le système comprend (en complément ou en substitution) des moyens de réalité augmentée et/ou de réalité virtuelle.

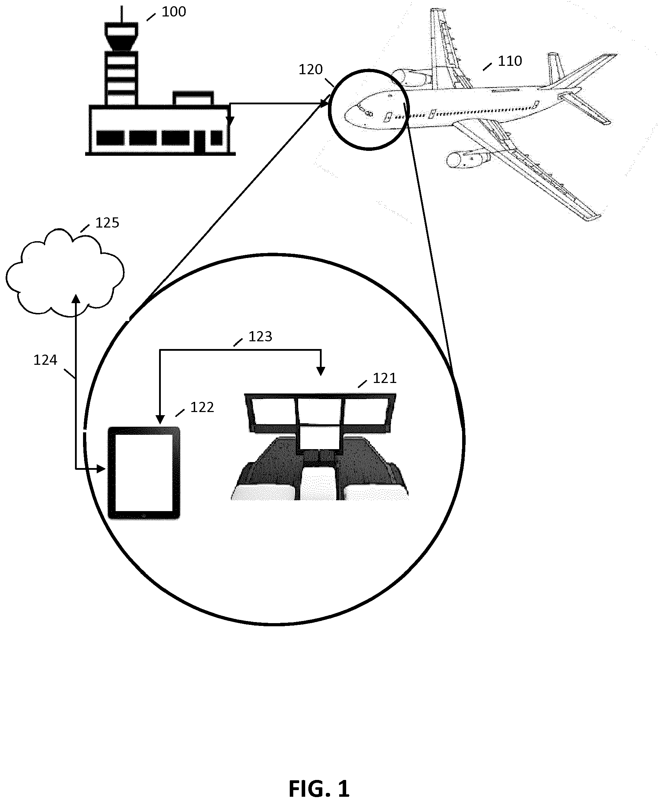

La figure 1 illustre l'environnement technique global de l'invention. Des équipements avioniques ou des moyens aéroportuaires 100 (par exemple une tour de contrôle en lien avec les systèmes de contrôle aérien) sont en communication avec un aéronef 110. Un aéronef est un moyen de transport capable d'évoluer au sein de l'atmosphère terrestre. Par exemple, un aéronef peut être un avion ou un hélicoptère (ou bien encore un drone). L'aéronef comprend une cabine de pilotage ou un cockpit 120. Au sein du cockpit se trouvent des équipements de pilotage 121 (dits équipements avioniques), comprenant par exemple un ou plusieurs calculateurs de bord (moyens de calcul, de mémorisation et de stockage de données), dont un FMS, des moyens d'affichage ou de visualisation et de saisie de données, des moyens de communication, ainsi que (éventuellement) des moyens de retours haptiques et un calculateur de roulage. Une tablette tactile ou un EFB 122 peut se trouver à bord, de manière portative ou intégrée dans le cockpit. Ledit EFB peut interagir (communication bilatérale 123) avec les équipements avioniques 121. L'EFB peut également être en communication 124 avec des ressources informatiques externes, accessible par le réseau (par exemple informatique en nuage ou "Cloud computing" 125). En particulier, les calculs peuvent s'effectuer localement sur l'EFB ou de manière partielle ou totale dans les moyens de calculs accessibles par le réseau. Les équipements de bord 121 sont généralement certifiés et régulés tandis que l'EFB 122 et les moyens informatiques connectés 125 ne le sont généralement pas (ou dans une moindre mesure). Cette architecture permet d'injecter de la flexibilité du côté de l'EFB 122 en s'assurant d'une sécurité contrôlée du côté de l'avionique embarquée 121.

Parmi les équipements de bord figurent différents écrans. Les écrans ND (affichage graphique associé au FMS) sont généralement disposés dans le champ de vue primaire, en "tête moyenne", tandis que les FMD sont positionnés en "tête basse". L'ensemble des informations entrées ou calculées par le FMS est regroupée sur des pages dites FMD. Les systèmes existants permettent de naviguer de page en page, mais la taille des écrans et la nécessité de ne pas mettre trop d'informations sur une page pour sa lisibilité ne permettent pas d'appréhender dans leur globalité la situation actuelle et future du vol de manière synthétique. Les équipages des avions modernes en cabine sont constitués en général de deux personnes, réparties de chaque côté de la cabine : un côté "pilote" et un côté "copilote". Les avions d'affaires n'ont parfois qu'un pilote, et certains avions plus anciens ou de transport militaire ont un équipage de trois personnes. Chacun visualise sur son IHM les pages qui l'intéressent. Plusieurs parmi la centaine possibles sont en général affichées en permanence pendant l'exécution de la mission: la page "plan de vol" tout d'abord, qui contient les informations de route suivie par l'avion (liste des prochains points de passage avec leurs prédictions associées en distance, temps, altitude, vitesse, carburant, vent). La route est divisée en segments, legs et procédures, elles-mêmes constituées de points et comprend une page "performances" qui contient les paramètres utiles pour guider l'avion sur le court terme (vitesse à suivre, plafonds d'altitude, prochains changements d'altitudes). Il existe également une multitude d'autres pages disponibles à bord (les pages de révisions latérales et verticales, les pages d'informations, des pages spécifiques à certains aéronefs), soit généralement une centaine de pages.

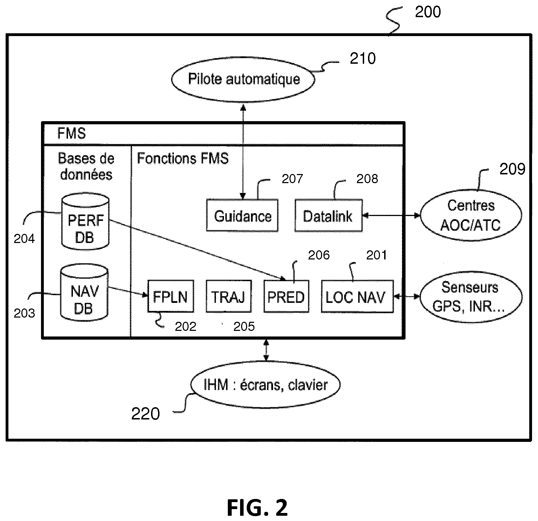

La figure 2 illustre schématiquement la structure et les fonctions d'un système de gestion de vol de type FMS connu. Un système de type FMS 200 disposé dans le cockpit 120 et les moyens avioniques 121 dispose d'une interface homme-machine 220 comprenant des moyens de saisie, par exemple formés par un clavier, et des moyens d'affichage, par exemple formés par un écran d'affichage, ou bien simplement un écran d'affichage tactile, ainsi qu'au moins les fonctions suivantes:
- Navigation (LOCNAV) 201, pour effectuer la localisation optimale de l'aéronef en fonction des moyens de géolocalisation tels que le géo-positionnement par satellite GNSS (e.g. GPS, GALILEO, GLONASS, ...), les balises de radionavigation VHF, les centrales inertielles. Ce module communique avec les dispositifs de géolocalisation précités ;
- Plan de vol (FPLN) 202, pour saisir les éléments géographiques constituant le "squelette" de la route à suivre, tels que les points imposés par les procédures de départ et d'arrivée, les points de cheminement, les couloirs aériens, communément désignés "airways" selon la terminologie anglaise. Un FMS héberge en général plusieurs plans de vol (le plan de vol dit "Actif" sur lequel l'avion est guidé, le plan de vol "temporaire" permettant d'effectuer des modifications sans activer le guidage sur ce plan de vol et des plans de vols "inactifs" de travail (dits "secondaires").
- Base de données de navigation (NAVDB) 203, pour construire des routes géographiques et des procédures à partir de données incluses dans les bases relatives aux points, balises, legs d'interception ou d'altitude, etc;
- Base de données de performance, (PERFDB) 204, contenant les paramètres aérodynamiques et moteurs de l'appareil ;
- Trajectoire latérale (TRAJ) 205, pour construire une trajectoire continue à partir des points du plan de vol, respectant les performances de l'aéronef et les contraintes de confinement (RNAV pour Area Navigation ou RNP pour Required Navigation Performance) ;
- Prédictions (PRED) 206, pour construire un profil vertical optimisé sur la trajectoire latérale et verticale et donnant les estimations de distance, heure, altitude, vitesse, carburant et vent notamment sur chaque point, à chaque changement de paramètre de pilotage et à destination, qui seront affichées à l'équipage.
- Guidage (GUID) 207, pour guider dans les plans latéraux et verticaux l'aéronef sur sa trajectoire tridimensionnelle, tout en optimisant sa vitesse, à l'aide des informations calculées par la fonction Prédictions 206. Dans un aéronef équipé d'un dispositif de pilotage automatique 210, ce dernier peut échanger des informations avec le module de guidage 207;
- Liaison de données numériques (DATALINK) 208 pour échanger des informations de vol entre les fonctions Plan de vol/Prédictions et les centres de contrôle ou les autres aéronefs 209.
- un ou plusieurs écrans IHM 220.

L'ensemble des informations entrées ou calculées par le FMS est regroupée sur des écrans d'affichages (pages FMD, NTD et PFD, HUD ou autre). Sur des avions de ligne type Airbus A320 ou A380, la trajectoire du FMS est affichée en tête moyenne, sur un écran d'affichage dit Navigation Display (ND). Le "Navigation display" offre une vision géographique de la situation de l'aéronef, avec l'affichage d'un fond cartographique (dont la nature exacte, l'apparence, le contenu peuvent varier), avec parfois le plan de vol de l'avion, les points caractéristiques de la mission (point équi-temps, fin de montée, début de descente,...), le trafic environnant, la météo sous ses divers aspects tels que les zones de pluies et d'orages conditions givrantes, etc. provenant généralement du radar météorologique embarqué (e.g. échos de réflectivité qui permettent de détecter des zones pluvieuses et orageuses. Sur les avions de la génération Airbus A320, A330, A340, Boeing B737/747, il n'y a pas d'interactivité avec l'écran d'affichage du plan de vol. La construction du plan de vol se fait à partir d'un clavier alphanumérique sur une interface dite MCDU (Multi Purpose Control Display). Le plan de vol est construit en saisissant la liste des "*waypoints*" (points de passage) représentés sous forme tabulaire. On peut saisir un certain nombre d'informations sur ces "*waypoints*", via le clavier, telles que les contraintes (vitesse, altitude) que doit respecter l'avion au passage des *waypoints.* Cette solution présente plusieurs défauts. Elle ne permet pas de déformer la trajectoire directement, il faut passer par une saisie successive de "*waypoints*", soit existants dans les bases de données de navigation (NAVDB standardisées à bord au format AEEC ARINC 424), soit créés par l'équipage via sa MCDU (en saisissant des coordonnées par exemple). Cette méthode est fastidieuse et imprécise compte tenu de la taille des écrans d'affichage actuels et de leur résolution. Pour chaque modification (par exemple une déformation de la trajectoire pour éviter un aléa météo dangereux, qui se déplace), il peut être nécessaire de ressaisir une succession de *waypoints* en dehors de la zone en question.

A partir du plan de vol défini par le pilote (liste de points de passage appelés "*waypoints*"), la trajectoire latérale est calculée en fonction de la géométrie entre les points de passage (appelés couramment leg) et/ou les conditions d'altitude et de vitesse (qui sont utilisées pour le calcul du rayon de virage). Sur cette trajectoire latérale, le FMS optimise une trajectoire verticale (en altitude et vitesse), passant par des contraintes éventuelles d'altitude, de vitesse, de temps. L'ensemble des informations entrées ou calculées par le FMS est regroupée sur des écrans d'affichages (pages MFD, visualisations NTD et PFD, HUD ou autre). La partie IHM 220 de la figure 2 comporte donc a) le composant IHM du FMS qui structure les données pour envoi aux écrans d'affichages (dits CDS pour Cockpit Display system) et b) le CDS lui-même, représentant l'écran et son logiciel de pilotage graphique, qui effectue l'affichage du dessin de la trajectoire, et qui comporte également les drivers informatiques permettant d'identifier les mouvements du doigt (dans le cas d'une interface tactile) ou du dispositif de pointage.

L'ensemble des informations entrées ou calculées par le FMS est regroupée sur des « pages » (affichées graphiquement sur un ou plusieurs des écrans du FMS). Les systèmes existants (dits « glass cockpits ») permettent de naviguer de page en page, mais la taille des écrans et la nécessité de ne pas surcharger les pages (afin de préserver leur lisibilité) ne permettent pas d'appréhender la situation actuelle et future du vol de manière synthétique. Ainsi, la recherche d'un élément particulier du plan de vol peut prendre beaucoup de temps au pilote, surtout s'il doit naviguer au sein de nombreuses pages (plan de vol de longue durée). En effet, les différentes technologies de FMS et d'écrans actuellement utilisés ne permettent que d'afficher qu'entre 6 et 20 lignes et entre 4 et 6 colonnes.

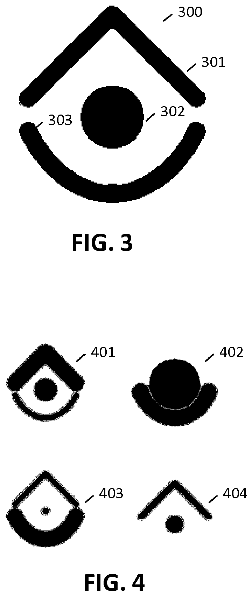

La figure 3 montre un exemple d'un type de symbole selon un mode de réalisation de l'invention.

Les symboles selon l'invention présente une propriété de « superposabilité », construite a priori ou a posteriori. Cette propriété de superposition est configurable et désigne la capacité d'un symbole graphique à être superposé graphiquement à un plusieurs autres symboles graphiques prédéfinis. Dans un mode de réalisation de l'invention, un symbole graphique est associé à une pluralité de formes ou de déclinaisons graphiques, chacune de ces formes étant configurée pour optimiser la lisibilité graphique des informations encodées dans ledit symbole lorsque le symbole graphique est affiché sur ou sous d'autres éléments graphiques.

L'exemple 300 figuré à la figure 3, comprend une sous partie 301 représentant les conditions météorologiques de turbulence en ciel clair (« *clear air turbulence* »), une sous-partie 302 associée aux conditions météorologiques de zones convectives (« *convection* ») et une sous-partie 303 associée aux conditions météorologiques de givrage (« *icing* »).

De manière unifiée, le symbole 300 concatène trois types d'informations météorologiques en un seul et unique symbole, tout en ne requérant pas d'apprentissage significatif de la part du pilote du pilote.

Selon un aspect de l'invention, des icônes standards (standardisées - ou standards *de facto*) sont fusionnées ou unifiées, alors qu'elles étaient auparavant utilisées de manière séparée. Cette fusion astucieuse évite une période d'apprentissage significative de la part du pilote. Par exemple, en matière de « *Clear Air Turbulence* » (turbulence en ciel clair), « *Icing* » (givrage) et « *Convection* » (zones convectives), le symbole géométrique unifié 300 combine les symboles standards des trois types d'événements dans un seul et unique motif, permettant une reconnaissance rapide des trois composantes par le pilote.

Le principe de superposition peut être généralisé.

Dans un développement, la symbologie selon l'invention peut restituer des aspects quantitatifs, lesquels sont notamment contextuels (c'est-à-dire traduise ou reflète des données ou des valeurs, telles que filtrées et/ou sélectionnés dans une base de données). En d'autres termes, le résultat technique d'opérations techniques conduites sur des données techniques restitué par un encodage graphique particulier.

Différents types de symboles ou produits météorologiques peuvent être manipulés par le procédé selon l'invention, notamment de type « surfacique » (e.g. les produits sont représentés par des surfaces graphiques comme des polygones, notamment pour le givre et la convection, la nébulosité, les nuages de cendres, SIGMET, etc), de type « linéaire » (e.g. des produits représentés linéairement, dont la manipulation lors des changements d'échelle et/ou les ajustements d'affichage est plus délicate en comparaison des surfaces, par exemple les lignes de *jet streams,* les lignes festonnées de front chaud/froid), de type « ponctuel » (e.g. produits représentés ponctuellement comme les impacts de foudre, l'état des aéroports en fonction des METAR/TAF, PIREP, ...), et de type « matriciel » (e.g. produits constitués par une matrice de mesures locales comme une grille d'affichage des vents/températures à différentes altitudes).

La figure 4 montre des exemples de déclinaisons graphiques d'un type de symbole donné (en l'espèce 300)

Par exemple, la variante de réalisation 401 reflète des conditions météorologiques de turbulence significative et ou à l'inverse des conditions de givrage moindres ou négligeables. La variante de réalisation 402 montre l'absence de conditions turbulentes, mais insiste sur des conditions de convection et de givrage significatif (e. supérieure à un ou plusieurs seuils prédéfinis). La variante de réalisation 403 illustre une situation dans laquelle les conditions de givrage sont prépondérantes. La situation 404 illustre une situation dans laquelle les conditions de givrage sont inexistantes (e.g. ou inférieur à un seuil prédéfini). Les variantes de couleur ne sont pas représentées mais démultiplient les possibilités de la combinatoire.

Avantageusement, le codage ou encodage de l'information dans un ou plusieurs symboles selon l'invention peut être lu par un système automatisé (car connues de lui, i.e. « *machine-readable content* »). En d'autres termes, les symboles selon l'invention peuvent être considérés comme des codes, lisible tant par l'opérateur humain que par une machine (e.g. un ordinateur).

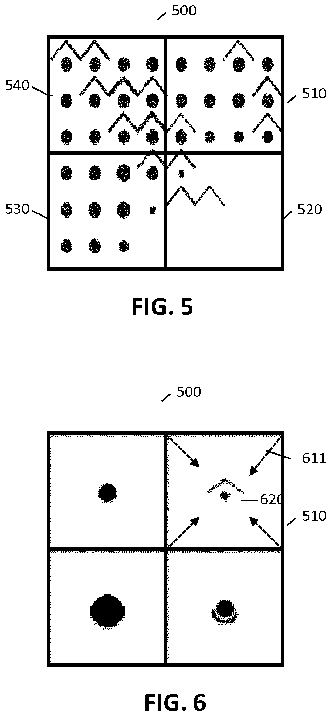

Les figures 5 et 6 illustrent des exemples d'étapes spécifiques du procédé selon l'invention. Dans un développement, le procédé selon l'invention peut en effet comprendre une ou plusieurs étapes consistant notamment à ajuster la densité visuelle des symboles affichés sur les écrans d'affichage au sein du cockpit de l'aéronef. Que la mesure de densité visuelle soit intrinsèque (c'est-à-dire par des mesures effectuées au sein du système d'affichage) ou bien extrinsèque (c'est-à-dire réalisées par les mesures effectuées par le système tiers), la quantité et ou qualité des symboles affichés peut être modifiée. Par exemple, en fonction du niveau de zoom c'est-à-dire du niveau d'agrandissement de la cartographie sous-jacente sélectionné par le pilote, la représentation graphique finale peut être plus ou moins aérée ou a contrario détaillée. En considérant, des échelles d'espaces ou pas ou cellules de calcul, le procédé peut comprendre une étape consistant à déterminer une ou plusieurs conditions météorologiques majoritaires au sein de chaque cellule de calcul.

La figure 5 montre un extrait d'un fond cartographique sur lequel sont sur imposées une pluralité de symbole selon l'invention. La figure montre quatre cellules (surfaces de 50 km²) 510, 520, 530 et 540.

La figure 6 montre un exemple d'ajustement de l'affichage (par exemple en fonction de la mesure de la densité d'affichage et/ou du contexte de vol). Dans chacune des cellules, il existe des conditions météorologiques différentes. Dans l'exemple, la densité visuelle de la cellule 510 étant trop élevée dans un contexte de vol particulier, un calcul 611 détermine l'association de la cellule 510 à un seul et unique symbole 620. Différentes modalités de calcul sont possibles pour effectuer de telles réductions. Il peut être déterminé et restitué les conditions météorologiques moyennes en cours sur la cellule. Alternativement, des filtres peuvent être appliqués et conduire à restituer uniquement des anomalies et/ou des événements critiques dans la cellule considérée. La détermination du symbole résultant peut également être fonction de critères ou de paramètres comprenant le contexte de vol, l'état physiologie du pilote à un instant donné, la criticité et/ou la sévérité de un ou plusieurs événements météorologiques, etc

Dans un mode de réalisation de l'invention, l'affichage est au moins partiellement conditionné à la mesure de la valeur d'un paramètre physiologique du pilote

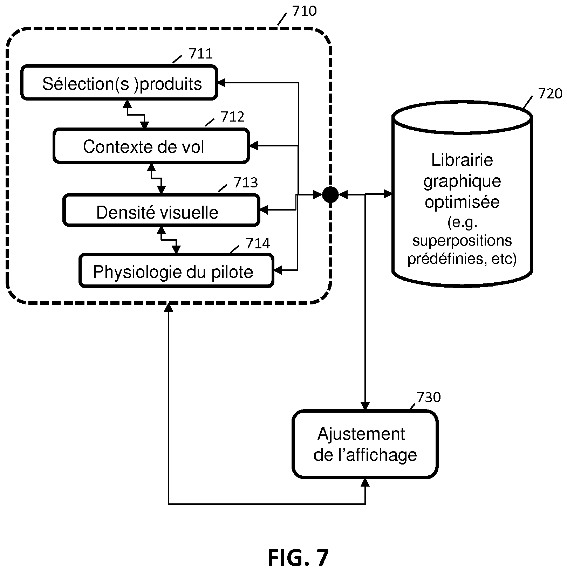

La figure 7 montre des exemples d'étapes du procédé selon l'invention.

En fonction de différents paramètres 710 (sélections de produits météo 711, contexte de vol 712, densité visuelle 713, physiologie 714), des symboles issus d'une base de données 720 optimisée de manière préalable sont affichés et l'affichage est ajusté 730.

Un même symbole peut être affiché différemment en fonction du contexte d'affichage et/ou de la densité d'affichage. Le contexte d'affichage peut notamment être déterminé en fonction du contexte de vol (e.g. décollage, montée, croisière, etc).

Par exemple, les différents symboles météorologiques peuvent être placés dans la zone de présence des produits météorologiques avec une taille adaptée au zoom de la cartographie, avec une envergure liée à la fréquence et/ou quantité du produit et une couleur adaptée à leur sévérité. Dans un mode de réalisation, les lignes de front et les symboles vent et température sont affichés de manière standard et sont superposés aux symboles *Clear Air Turbulence, Icing et convection.* Les lignes de front peuvent notamment être transparentes et laisser apparaître les autres produits météorologiques en arrière. Les symboles concernant le vent peuvent être suffisamment fins pour permettre de voir les produits en arrière-plan. Les températures peuvent être affichées de manière textuelle et l'affichage peut être adapté au niveau d'agrandissement courant (« zoom ») afin de permettre la visualisation des produits météorologiques en arrière-plan. Dans certains modes de réalisation, les nuages peuvent être représentés sous la forme de zones blanches plus ou moins denses, se superposant au fond de carte, avec en arrière-plan de tous les autres produits météo qui restent visibles. Les contours nuageux peuvent être identifiés par une ligne continue.

Certains symboles peuvent être associés à des priorités d'affichage plus élevées, non seulement en termes d'occurrence (si l'événement survient, il est immédiatement restitué à l'écran sans utilisation d'un délai temporel) mais aussi de profondeur de calcul (par exemple dans un mode de réalisation, l'événement météorologique associé à la foudre peut être manipulé de manière prioritaire, la foudre étant généralement jugée plus critique, et le symbole correspondant sera toujours affiché en premier plan le cas échéant. La foudre sera superposée à tous les produits dans un mode de réalisation de l'invention.

En fonction du niveau d'agrandissement (respectivement de réduction) de l'affichage (« zoom » et « dé-zoom »), certaines zones d'affichage peuvent être agrandies et/ou la distance entre deux symboles peut être augmentée.

Dans un mode de réalisation, à tout moment et pour chaque produit, le pilote peut sélectionner un symbole ou une représentation d'un produit météo pour accéder aux informations détaillées de la zone sélectionnée (appui long, appui court accompagné d'une commande prédéfinie, etc).

Différents niveaux de superposition graphique peuvent être prédéfinis i.e. de manière préalable. Dans un mode de réalisation, plusieurs types de symboles sont prédéfinis et chaque symbole possède différentes déclinaisons graphiques, chaque déclinaison étant associée à une propriété de superposition différente avec les différentes déclinaisons des différents types de symboles. L'affichage est ajusté dans la mesure où un niveau de superposition supérieur « ajoute » de l'information en superposant des symboles mais également en simplifie l'affichage pour certains aspects.

Différents ajustements sont possibles. Dans un mode de réalisation, le niveau de zoom ou d'agrandissement est augmenté (ou réduit). Dans d'autres modes de réalisation, par analyse d'image (effectuée de manière régulière fixe ou de manière continue dans le cas d'une capture vidéo), la densité d'information est estimée selon les différentes sous parties d'images et des ajustements d'affichage sont déterminés de manière dynamique. Par exemple, dans le cas où un écran d'affichage deviendrait trop « encombré » (quantité de texte ou de symboles graphiques en excès par rapport à un ou plusieurs seuils prédéfinis), les informations les moins prioritaires sont « réduites » ou « condensées » ou « synthétisées » sous forme de repères ou de symboles sélectionnables selon des modalités diverses (placement des repères interactifs sur ou le long d'une représentation graphique du vol de l'aéronef). Inversement, si la densité d'information affichée le permet, des informations réduites ou condensées ou synthétisées, par exemple antérieurement, sont développées ou détaillées ou étendues ou agrandies.

Dans un mode de réalisation de l'invention, la « densité visuelle » est maintenue sensiblement constante. La phase ou le contexte de vol peuvent moduler cette densité visuelle (par exemple, à l'atterrissage ou dans les phases critiques du vol, la densité d'information est réduite).

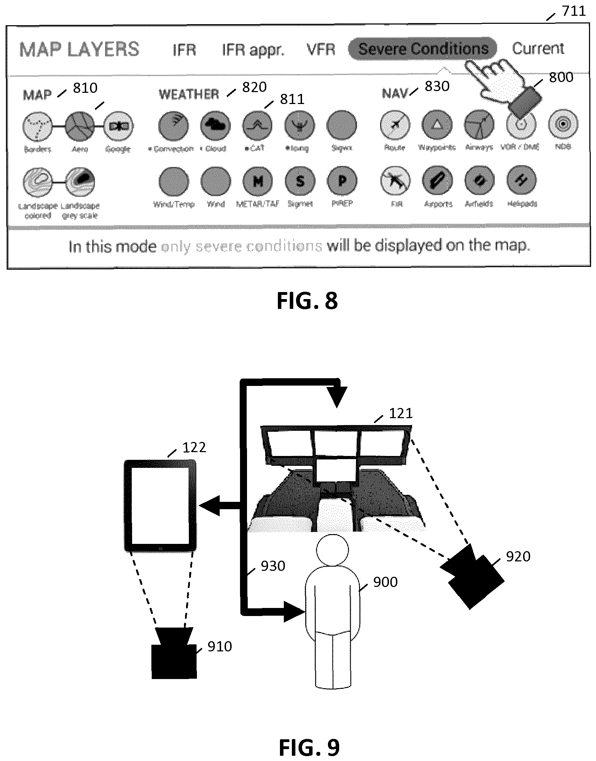

La figure 8 montre un exemple de sélection d'une pluralité de produits météorologiques.

Le pilote (ou un système informatisé) sélectionne un fond cartographique parmi plusieurs fonds cartographiques (i.e. différents calques d'affichage). De la même manière, un ou plusieurs critères d'affichage permettent de configurer la visualisation des informations météorologiques disponibles.

Le pilote peut notamment configurer l'affichage des données météorologiques en sélectionnant des types d'informations à afficher (le pilote peut les sélectionner tous, ou aucun, ou au cas par cas). Dans un mode de réalisation, le pilote peut sélectionner le paramètre ou facteur « *severe condition* » (conditions météorologiques sévères, i.e. potentiellement dangereuses pour l'aéronef), ce qui peut alors conduire à afficher toutes les « *severe conditions* » de tous les types de données météorologiques sous forme (par exemple) de zones indiquées comme orageuses, par exemple par des symboles (points de foudre) ou des figures (météo à l'aéroport). Avantageusement, l'existence d'une information de type « *severe condition* » peut être affichée à l'écran (par exemple un symbole comme une pastille de couleur) et peut indiquer quel type de données météo possède des « severe conditions ». En d'autres termes, l'existence d'une « severe *condition* » peut être notifiée de manière graphique.

Dans un mode de réalisation, différentes intensités des phénomènes atmosphériques peuvent être sélectionnées pour affichage. Par exemple, le pilote peut filtrer i.e. sélectionner le niveau de sévérité à afficher (par exemple « *moderate and* severe », « severe »).

Plus généralement, en matière d'information météorologique, des sélections manuelles et/ou automatiques peuvent être effectuées. De manière automatique, l'instrumentation de bord (capteurs, statut des volets, informatique embarquée, etc.) et/ou les déclarations manuelles du pilote peuvent déterminer le contexte de vol courant de l'aéronef (e.g. décollage, montée, croisière, approche, descente, etc.). Dans un développement, l'affichage est ajusté en fonction du contexte de vol courant. Il est en effet avantageux de montrer certaines informations météorologiques à certains endroits/instants (par exemple le vent au sol lors du décollage, la présence de *jet stream* en croisière etc). La contextualisation de l'information météo est avantageuse.

Dans certains modes de réalisation de l'invention, le procédé comprend des procédés logiques ou des étapes permettant de déterminer le "contexte de vol" ou " contexte de vol courant" de l'aéronef.

Le contexte de vol à un moment donné intègre l'ensemble des actions prises par les pilotes (et notamment les consignes de pilotage effectives) et l'influence de l'environnement extérieur sur l'aéronef.

Un "contexte de vol" comprend par exemple une situation parmi des situations prédéfinies ou pré-catégorisées associées à des données telle que la position, la phase de vol, les points de passage, la procédure en cours (et autres). Par exemple, l'aéronef peut être en phase d'approche pour l'atterrissage, en phase de décollage, en phase de croisière mais également en palier ascendant, palier descendant, etc (une variété de situations peut être prédéfinie). Par ailleurs, le "contexte de vol" courant peut être associé à une multitude d'attributs ou de paramètres descriptifs (état météorologique courant, état du trafic, statut du pilote comprenant par exemple un niveau de stress tel que mesuré par des capteurs, etc).

Un contexte de vol peut donc également comprendre des données, par exemple filtrées par priorité et/ou fondées sur des données de phase de vol, des problèmes météorologiques, des paramètres avioniques, des négociations ATC, des anomalies liées au statut du vol, des problèmes liés au trafic et/ou au relief. Des exemples de "contexte de vol" comprennent par exemple des contextes tels que "régime croisière / pas de turbulences / stress pilote nominal" ou bien encore "phase atterrissage / turbulences / stress pilote intense". Ces contextes peuvent être structurés selon divers modèles (e.g. hiérarchisés par exemple en arbre ou selon des dépendances diverses, y compris des graphes). Des catégories de contextes peuvent être définies, de manière à synthétiser les besoins en matière d'interaction homme-machine (e.g. délai d'interaction minimal ou maximal, quantité de mots minimale et maximale, etc). Il peut également subsister des règles spécifiques dans certains contextes, notamment d'urgences ou de situations critiques. Les catégories de contextes peuvent être statiques ou dynamiques (e.g. configurables).

Le procédé peut être implémenté dans un système comprenant des moyens pour déterminer un contexte de vol de l'aéronef, lesdits moyens de détermination comprenant en particulier des règles logiques, lesquelles manipulent des valeurs telles que mesurées par des moyens de mesure physique. En d'autres termes, les moyens de détermination du "contexte de vol" comprennent des moyens de système ou "hardware" ou physiques/tangibles et/ou des moyens logiques (e.g. des règles logiques, par exemple prédéfinies). Par exemple, les moyens physiques comprennent l'instrumentation avionique au sens propre (radars, sondes, etc) qui permettent d'établir des mesures factuelles caractérisant le vol. Les règles logiques représentent l'ensemble des traitements de l'information permettant d'interpréter (e.g. de contextualiser) les mesures factuelles. Certaines valeurs peuvent correspondre à plusieurs contextes et par corrélation et/ou calcul et/ou simulation, il est possible de départager des "contextes" candidats, au moyen de ces règles logiques. Une variété de technologies permet d'implémenter ces règles logiques (logique formelle, logique floue, logique intuitionniste, etc).

En fonction de ce contexte tel que déterminé par le procédé, le procédé selon l'invention peut restituer "sensoriellement" des informations dont la sélection est choisie avec soin ou "intelligence". Par restitution sensorielle, il est entendu que les informations peuvent être restituées par différents modes cognitifs (vision, ouïe, retours haptiques i.e. tactile/vibratile, etc) et/ou selon une combinaison de ces modes. Un seul sens cognitif peut être sollicité (par exemple via le seul affichage graphique des informations), mais selon certains modes de réalisation, une restitution multimodale peut être effectuée (affichage graphique et simultanément ou de manière asynchrone transmission de vibration via des dispositifs adaptés, par exemple au poignet du pilote). Avantageusement, la restitution multimodale permet une certaine robustesse de communication des consignes de vol aux pilotes. Par exemple, s'il est vraisemblable qu'une information n'a pas été prise en compte, des rappels utilisant une combinaison différente de modes cognitifs peuvent être effectués.

La figure 9 illustre des aspects de système de la mesure de la densité visuelle.

La densité d'affichage peut notamment déterminée par une mesure intrinsèque (e.g. nombre de pixels par unité de surface, tel qu'indiqué par le processeur graphique interne par exemple) et/ou par une mesure extrinsèque (e.g. une caméra vidéo 910 ou des moyens d'acquisition d'images 920 capturant le rendu final de la représentation des données sur l'EFB 122 et/ou les écrans FMS 121, par exemple en mesurant ce nombre de pixels par unité de surface).

Selon les modes de réalisation, la « densité visuelle » ou « densité d'affichage » peut être mesurée en nombre de pixels allumés ou actifs par centimètre carré, et/ou en nombre de caractères alphanumériques par unité de surface et/ou en nombre de motifs géométriques prédéfinis par unité de surface. La densité visuelle peut également être définie, au moins partiellement, selon des critères physiologiques (modèle de vitesse de lecture par le pilote, etc).

D'un point de vue système, des moyens d'acquisition d'images (par exemple un appareil photo ou une caméra vidéo disposée dans le cockpit) permettent de capturer au moins une partie de l'ensemble des informations visuelles affichées à destination du pilote (avantageusement, ce retour vidéo sera placé sur une visière tête haute, des *smartglasses* ou tout autre équipement porté par le pilote, de manière à capturer la vue subjective du pilote).

Dans un mode de réalisation, le procédé comprend les étapes consistant à recevoir une capture de l'écran d'affichage par un système d'acquisition d'images tiers et à déterminer une carte de densité visuelle de ladite capture.

La détermination de la densité visuelle peut se faire par extraction de données depuis des images ("scraping" en anglais). Peuvent être extraites des acquisitions d'images ou de vidéos des données telles que du texte (par OCR, Optical Character Récognition), des valeurs numériques, des positions de curseurs ou de cadran, etc. Des extractions de données ou informations depuis des flux audio sont également possibles (séparément ou en combinaison).

Une opération de "scraping" désigne une opération de récupération ou de capture d'informations sur un objet numérique, ladite récupération ou capture n'étant pas prévue d'origine par l'objet numérique. Par exemple, cette récupération d'informations peut comprendre l'acquisition d'une ou de plusieurs images puis la reconnaissance de caractères au sein des images capturées.

Dans un mode de réalisation, une prise de vue est acquise, analysée, détourée, et les informations capturées sont extraites de l'image. La connaissance préétablie du type d'image capturée peut permettre une reconnaissance spécifique (e.g. angle de vue). Dans une variante, la prise de vue sera de type vidéo 920 (c'est-à-dire acquisition d'une succession d'images fixes, le grand nombre d'images capturées permettant notamment une optimisation de la capture d'informations et/ou une robustesse aux mouvements de l'utilisateur portant les moyens d'acquisition d'images. selon un autre mode de réalisation, les moyens d'acquisition d'images sont montés de manière fixe dans le cockpit de l'aéronef. Par ce moyen, la capture ou la récupération d'informations peut s'effectuer de manière continue. Selon un autre mode de réalisation, les moyens d'acquisition d'images peuvent correspondre à des appareils photo ou des caméras vidéo fixées sur des casques de réalité virtuelle ou augmentée.

Dans un développement de l'invention, le procédé comprend en outre une étape consistant à recevoir 930 au moins une valeur associée à l'état physiologique du pilote 900 de l'aéronef et à ajuster l'affichage en fonction de l'état physiologique du pilote tel que mesuré. La détermination de l'état physiologique du pilote comprend des mesures directes et/ou indirectes. Les mesures directes comprennent notamment une ou plusieurs mesures directes du rythme cardiaque et/ou ECG (électrocardiogramme) et/ou EEG (électroencéphalogramme) et/ou de la transpiration et/ou du rythme de la respiration du pilote. Les mesures indirectes comprennent des estimations de l'excitation ou de la fatigue ou du stress du pilote, lesquels états peuvent être corrélés aux phases de vol.

Différentes modèles de gestion de l'IHM sont possibles. La gestion contextuelle et physiologique de l'affichage peut être effectuée à base de règles.

La reconfiguration de l'affichage peut être conditionnelle, e.g. les règles peuvent comprendre des tests et/ou des vérifications. Les règles peuvent prendre des paramètres de type avionique et/ou non-avionique. Par exemple, les différentes phases du plan de vol (décollage, croisière ou atterrissage), y compris selon une granularité plus fine, peuvent être associées à des règles de configurations / reconfigurations différentes. Par exemple, les besoins en affichage lors du décollage ne sont pas les mêmes que ceux durant le régime de croisière et la densité de l'affichage peut être reconfiguré en conséquence. Les tests peuvent aussi prendre en compte des données cognitives et/ou biologiques (par exemple via la mesure de la charge cognitive du pilote et conduisant en retour à une adaptation de l'affichage; un monitoring des paramètres biologiques du pilote e.g. rythme cardiaque et transpiration inférant des estimations de niveau de stress peut conduire à adapter ou reconfigurer l'affichage d'une certaine manière, par exemple en densifiant ou en allégeant les écrans, etc).

Dans un mode de réalisation, la reconfiguration de l'écran est "débrayable", i.e. le pilote peut décider d'annuler toutes les adaptations de l'affichage en cours et revenir rapidement au mode d'affichage natif sans ladite reconfiguration. La sortie du mode de reconfiguration peut par exemple se faire par commande vocale (*passphrase*) ou via un actuateur (bouton de désactivation).

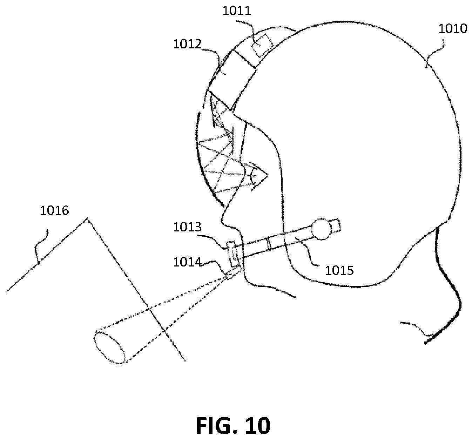

La figure 10 illustre différents aspects relatifs aux interfaces homme-machine IHM qui peuvent être mises en œuvre pour implémenter le procédé selon l'invention. En complément - ou en substitut - des écrans du calculateur de bord FMS et/ou EFB, des moyens IHM supplémentaires peuvent être utilisés. De manière générale, les systèmes avionique FMS (qui sont des systèmes certifiés par le régulateur aérien et qui peuvent présenter certaines limitations en termes d'affichage et/ou d'ergonomie) peuvent être avantageusement complémentés par des moyens non avioniques, en particulier des IHM avancées.

La représentation d'au moins une partie du vol de l'aéronef peut être réalisée en deux dimensions (e.g. écran d'affichage) mais également en trois dimensions (e.g. réalité virtuelle ou affichage 3D sur écran). Dans des modes de réalisation en 3D, les repères peuvent être des zones sélectionnables de l'espace (par différents moyens e.g. par des interfaces de réalité virtuelle, gant ou « *glove* », trackball ou selon d'autres dispositifs). L'affichage en trois dimensions peut être complémentaire de l'affichage en deux dimensions au sein du cockpit (e.g. casque de réalité virtuel semi transparents, casque de réalité augmentée, etc). Le cas échéant, diverses formes de représentation du vol sont possibles, la dimension supplémentaire de profondeur pouvant être allouée à une dimension de temps (e.g. durée du vol) et/ou d'espace (e.g. espacement des différents waypoints, représentation physique de la trajectoire de l'aéronef dans l'espace, etc). Les mêmes variantes ou des variantes similaires au cas 2D peuvent être mises en oeuvre : gestion de la densité des informations, mise en place des repères, apparitions et disparitions des symboles, mise en évidence des événements au cours du vol, etc.

En particulier, les interfaces homme-machine peuvent faire usage de casques de réalité virtuelle et/ou augmentée. La figure 10 montre un casque de réalité virtuelle opaque 1010 (ou un casque de réalité augmentée semi transparent ou un casque à transparence configurable) porté par le pilote. Le casque d'affichage individuel 1010 peut être un casque de réalité virtuelle (RV ou VR en anglais), ou un casque de réalité augmentée (RA ou AR en anglais) ou une visée haute, etc. Le casque peut donc être un *"head-mounted display*", un "*wearable* computer", des "glasses" ou un visiocasque. Le casque peut comprendre des moyens de calcul et de communication 1011, des moyens de projection 1012, des moyens d'acquisition audio 1013 et des moyens de projection vidéo et/ou d'acquisition vidéo 1014. De la sorte, le pilote peut - par exemple au moyen de commandes vocales - configurer la visualisation du plan de vol en trois dimensions (3D). Les informations affichées dans le casque 1010 peuvent être entièrement virtuelles (affichées dans le casque individuel), entièrement réelles (par exemple projetées sur les surfaces planes disponibles dans l'environnement réel du cockpit) ou une combinaison des deux (en partie un affichage virtuel superposé ou fusionné avec la réalité et en partie un affichage réel via des projecteurs).

La restitution d'informations peut notamment s'effectuer de manière multimodale (e.g. retours haptiques, restitution visuelle et/ou auditive et/ou tactile et/ou vibratoire).

L'affichage peut également se caractériser par l'application de règles d'emplacements et de règles d'affichage prédéfinies. Par exemple, les interfaces homme-machine (ou les informations) peuvent être "distribuées" (segmentées en portions distinctes, éventuellement partiellement redondantes, puis réparties) entre les différents écrans virtuel (e.g. 1010) et/ou réels (e.g. FMS, TAXI).

Les différentes étapes de la méthode peuvent être implémentées en tout ou partie sur le FMS et/ou sur un ou plusieurs EFB. Dans un mode de réalisation particulier, l'ensemble des informations sont affichées sur les écrans du seul FMS. Dans un autre mode de réalisation, les informations associées aux étapes de la méthode sont affichées sur les seuls EFB embarqués. Enfin, dans un autre mode de réalisation, les écrans du FMS et d'un EFB peuvent être utilisés conjointement, par exemple en "distribuant" les informations sur les différents écrans des différents appareils. Une distribution spatiale des informations effectuée de manière appropriée peut contribuer à réduire la charge cognitive du pilote et par suite améliorer la prise de décision et accroître la sécurité du vol.

L'invention peut également être mise en œuvre sur ou pour des écrans d'affichage différents, notamment les sacs de vol EFB, ANF (Airport Navigation Function), etc. Dans un développement, le système comprend des moyens de réalité augmentée et/ou de réalité virtuelle.

Les moyens d'affichage peuvent comprendre, outre les écrans du FMS, un casque de réalité virtuelle opaque et/ou un casque de réalité augmentée semi transparent ou un casque à transparence configurable, des projecteurs (pico-projecteurs par exemple, ou vidéoprojecteurs pour projeter les scènes de simulation) ou bien encore une combinaison de tels appareils. Le casque peut donc être un "head-mounted display", un "wearable computer", des "glasses", un visiocasque, etc. Les informations affichées peuvent être entièrement virtuelles (affichées dans le casque individuel), entièrement réelles (par exemple projetées sur les surfaces planes disponibles dans l'environnement réel du cockpit) ou une combinaison des deux (en partie un affichage virtuel superposé ou fusionné avec la réalité et en partie un affichage réel via des projecteurs).

Les moyens AR comprennent en particulier des systèmes de type HUD ("Head Up Display" visée tête haute) et les moyens VR comprennent en particulier des systèmes de type EVS ("*Enhanced Vision System*") ou SVS (*"Synthetic Vision System*")*.*

L'information visuelle peut être distribuée ou répartie ou projetée ou masquée en fonction du contexte visuel immersif du pilote. Cette "distribution" peut amener à considérer l'environnement du pilote de manière opportuniste en considérant toutes les surfaces disponibles de façon à ajouter (superposer, surimposer) des informations virtuelles, choisies de manière appropriée dans leur nature (quoi afficher), temporalité (quand afficher, à quelle fréquence) et emplacement (priorité des affichages, stabilité des emplacements, etc). A un extrême, l'ensemble des emplacements peu ou faiblement utilisés dans l'environnement de l'utilisateur peuvent être exploités de façon à densifier l'affichage d'information. Plus encore, par projection de masques d'images superposée aux objets réels, l'affichage peut « gommer » un ou plusieurs instruments de commande présents physiquement dans le cockpit (manettes, boutons, actuateurs) dont la géométrie est connue et stable pour augmenter plus encore les surfaces adressables. L'environnement réel du cockpit peut donc se retrouver transformé en autant d'écrans "potentiels", voire en un unique écran unifié.

L'affichage peut être « distribué » au sein du cockpit : les divers écrans présents dans le cockpit, selon qu'ils sont accessibles ou non, peuvent être mis à contribution pour répartir les informations qui doivent être affichées. Par ailleurs, des moyens de réalité augmentée et/ou virtuelle peuvent accroître les surfaces d'affichage. L'augmentation de la surface d'affichage disponible ne rend pas caduque le contrôle de la densité d'affichage permise par l'invention. Au contraire, la reconfiguration (contextuelle) de l'affichage cumulant cet accroissement de la surface d'affichage adressable et de contrôle de la densité visuelle (e.g. concentration ou densification contextuelle) permettent d'améliorer significativement l'interaction homme-machine.

Dans un mode de réalisation, la reconfiguration de l'écran selon l'invention est "débrayable", i.e. le pilote peut décider d'annuler ou de désactiver toutes les modifications de l'affichage en cours pour revenir rapidement au mode d'affichage "nominal" i.e. natif sans les modifications d'affichage. La sortie du mode de reconfiguration peut par exemple se faire par commande vocale (*passphrase*) ou via un actuateur (bouton de désactivation). Différents événements peuvent déclencher cette sortie précipitée des reconfigurations graphiques en cours (par exemple "séquencement" d'un waypoint, un changement de phase de vol, la détection d'une anomalie majeure telle une panne moteur, une dépressurisation, etc)

Dans un développement, le système comprend exclusivement des moyens d'interface de type tactile. Dans un mode de réalisation particulier de l'invention, le cockpit est entièrement tactile, i.e. exclusivement constitué d'interfaces IHM de type tactile. Les procédés et systèmes selon l'invention permettent en effet des modes de réalisation "tout tactile", c'est-à-dire selon un environnement d'interaction homme-machine entièrement constitué d'écrans tactiles, sans aucun actuateur tangible mais avantageusement entièrement reconfigurable.

Dans un développement, le système comprend en outre des moyens d'acquisition d'images du cockpit (e.g. interprétation ou réinjection de données par OCR et/ou reconnaissance d'images - par « scraping » -, caméra montée sur un casque porté par le pilote ou caméra fixe en arrière du cockpit) et/ou un dispositif de suivi du regard.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Certains des moyens ou des ressources informatiques peuvent être distribués ("Cloud computing").

## Revendications

1. Procédé mis en œuvre par ordinateur de gestion de données météorologiques pour la gestion du vol d'un aéronef, comprenant les étapes consistant à :
- recevoir un fond cartographique parmi plusieurs fonds cartographiques prédéfinis ;
- recevoir une pluralité de sélections (711) de symboles météorologiques ;
- recevoir des données météorologiques associées au plan de vol de l'aéronef, selon une première échelle d'espace;
- déterminer un ou plusieurs types de symboles graphiques en fonction des symboles météorologiques sélectionnés et des données météorologiques reçues ;
- en fonction d'une seconde échelle d'espace, déterminer une ou plusieurs déclinaisons graphiques superposables des types de symboles graphiques, des superpositions graphiques desdites déclinaisons (720) des types de symboles étant prédéfinies;
- afficher (730) le fond cartographique et les déclinaisons graphiques superposables déterminées selon la seconde échelle d'espace ;
- mesurer la densité visuelle (713) de l'affichage
- ajuster ledit affichage en fonction de la densité visuelle mesurée.

2. Procédé selon l'une des revendications précédentes, comprenant en outre une étape consistant à déterminer le contexte de vol courant (712) de l'aéronef et la pluralité de sélections de symboles météorologiques étant déterminée en fonction dudit contexte de vol courant de l'aéronef.

3. Procédé selon la revendication 1, les superpositions graphiques des déclinaisons des types de symboles étant associées à des scores visuels prédéfinis et l'étape consistant à déterminer une ou plusieurs déclinaisons graphiques des types de symboles graphiques comprenant l'étape consistant à maximiser la somme des scores associés aux superpositions des déclinaisons graphiques déterminées.

4. Procédé selon la revendication 1, l'étape consistant à ajuster l'affichage comprenant une étape consistant à modifier le type et/ou le nombre de symboles graphiques.

5. Procédé selon la revendication 1, l'étape consistant à ajuster l'affichage comprenant les étapes consistant à éliminer et/ou à superposer un ou plusieurs types ou déclinaisons graphiques des symboles affichés.

6. Procédé selon l'une des revendications précédentes, comprenant en outre une étape consistant à recevoir au moins une valeur associée à l'état physiologique (714) du pilote de l'aéronef et à déterminer une ou plusieurs déclinaisons graphiques des types de symboles graphiques et/ou ajuster l'affichage en fonction de l'état physiologique du pilote.

7. Procédé selon la revendication 1, l'ajustement de l'affichage étant désactivé sur requête.

8. Produit programme d'ordinateur, comprenant des instructions de code permettant d'effectuer les étapes du procédé selon l'une quelconque des revendications 1 à 8, lorsque ledit programme est exécuté sur un ordinateur.

9. Système comprenant des moyens pour mettre en œuvre les étapes du procédé selon l'une quelconque des revendications 1 à 7, comprenant au moins un écran d'affichage choisi parmi un écran de vol PFD et/ou un écran de navigation ND/VD et/ou un écran multifonction MFD et/ou un ou plusieurs écrans d'affichage d'un sac de vol électronique ou Electronic Flight Bag.

10. Système selon la revendication 9, comprenant des moyens d'acquisition d'images d'un ou de plusieurs écrans d'affichage.

11. Système selon l'une quelconque des revendications 9 à 10, comprenant des moyens de surveillance de la physiologie du pilote de l'aéronef.

12. Système selon l'une quelconque des revendications 9 à 11, comprenant un dispositif de suivi du regard du pilote.

13. Système selon l'une quelconque des revendications 9 à 12, comprenant des moyens de réalité augmentée et/ou de réalité virtuelle.

## Patentansprüche

1. Computerimplementiertes Verfahren für das Management von meteorologischen Daten für das Flugmanagement eines Luftfahrzeugs, das die folgenden Schritte beinhaltet:
- Empfangen eines Kartenhintergrunds unter mehreren vordefinierten Kartenhintergründen;
- Empfangen von mehreren Auswahlen (711) von meteorologischen Symbolen;
- Empfangen von mit dem Flugplan des Luftfahrzeugs assoziierten meteorologischen Daten gemäß einem ersten Raummaßstab;
- Bestimmen von einem oder mehreren Typen von grafischen Symbolen in Abhängigkeit von den ausgewählten meteorologischen Symbolen und den empfangenen meteorologischen Daten;
- Bestimmen, in Abhängigkeit von einem zweiten Raummaßstab, von einem oder mehreren überlagerbaren Grafikdeklinationen von grafischen Symboltypen, wobei die grafischen Überlagerungen der Deklinationen (720) der Symboltypen vordefiniert sind;
- Anzeigen (730) des Kartenhintergrunds und der bestimmten überlagerbaren grafischen Deklinationen gemäß dem zweiten Raummaßstab;
- Messen der visuellen Dichte (713) der Anzeige;
- Justieren der Anzeige in Abhängigkeit von der gemessenen visuellen Dichte.

2. Verfahren nach dem vorherigen Anspruch, das ferner einen Schritt beinhaltet, der darin besteht, den laufenden Flugkontext (712) des Luftfahrzeugs zu bestimmen, wobei die mehreren Auswahlen von meteorologischen Symbolen in Abhängigkeit von dem laufenden Flugkontext des Luftfahrzeugs bestimmt werden.

3. Verfahren nach Anspruch 1, wobei die grafischen Überlagerungen von Deklinationen der Symboltypen mit vordefinierten visuellen Bewertungen assoziiert sind, und wobei der Schritt, der darin besteht, eine oder mehrere grafische Deklinationen der grafischen Symboltypen zu bestimmen, einen Schritt beinhaltet, der darin besteht, die Summe der mit den Überlagerungen der bestimmten grafischen Deklinationen assoziierten Bewertungen zu maximieren.

4. Verfahren nach Anspruch 1, wobei der Schritt, der im Justieren der Anzeige besteht, einen Schritt beinhaltet, der darin besteht, den Typ und/oder die Anzahl von grafischen Symbolen zu modifizieren.

5. Verfahren nach Anspruch 1, wobei der Schritt, der im Justieren der Anzeige besteht, Schritte beinhaltet, die darin bestehen, einen oder mehrere Typen oder grafische Deklinationen der angezeigten Symbole zu eliminieren und/oder zu überlagern.

6. Verfahren nach einem der vorherigen Ansprüche, das ferner einen Schritt beinhaltet, der darin besteht, wenigstens einen mit dem physiologischen Zustand (714) des Piloten des Luftfahrzeugs assoziierten Wert zu empfangen und eine oder mehrere grafische Deklinationen der grafischen Symboltypen zu bestimmen und/oder die Anzeige in Abhängigkeit vom physiologischen Zustand des Piloten zu justieren.

7. Verfahren nach Anspruch 1, wobei die Justierung der Anzeige auf Anforderung deaktiviert wird.

8. Computerprogrammprodukt, das Code-Befehle umfasst, die es zulassen, die Schritte des Verfahrens nach einem der Ansprüche 1 bis 8 durchzuführen, wenn das Programm auf einem Computer ausgeführt wird.

9. System, umfassend Mittel zum Durchführen der Schritte des Verfahrens nach einem der Ansprüche 1 bis 7, umfassend wenigstens einen Anzeigeschirm, ausgewählt aus einem PFD-Flugbildschirm und/oder einem ND/VD-Navigationsbildschirm und/oder einem MFD-Multifunktionsbildschirm und/oder einem oder mehreren Anzeigebildschirmen einer elektronischen Flugtasche oder Electronic Flight Bag.

10. System nach Anspruch 9, das Mittel zum Erfassen von Bildern von einem oder mehreren Anzeigebildschirmen umfasst.

11. System nach einem der Ansprüche 9 bis 10, das Mittel zum Überwachen der Physiologie des Piloten des Luftfahrzeugs umfasst.

12. System nach einem der Ansprüche 9 bis 11, das eine Vorrichtung zum Verfolgen des Blicks des Piloten umfasst.

13. System nach einem der Ansprüche 9 bis 12, das Augmented-Reality-Mittel und/oder Virtual-Reality-Mittel umfasst.

## Claims

1. Method implemented by a computer for managing meteorological data for managing the flight of an aircraft, comprising the steps consisting in:
- receiving a cartographic background out of several predefined cartographic backgrounds;
- receiving a plurality of selections (711) of meteorological symbols;
- receiving meteorological data associated with the flight plan of the aircraft, according to a first space scale;
- determining one or more types of graphic symbols as a function of the meteorological symbols selected and of the meteorological data received;
- as a function of a second space scale, determining one or more graphic superimposable declinations of the types of graphic symbols, the graphic superimpositions of said declinations (720) of the types of symbols being predefined;
- displaying (730) the cartographic background and the superimposable graphic declinations determined according to the second space scale;
- measuring the visual density (713) of the display;
- adjusting said display as a function of the visual density measured.

2. Method according to the preceding claim, further comprising a step consisting in determining the current flight context (712) of the aircraft, the plurality of selections of meteorological symbols being determined as a function of said current flight context of the aircraft.

3. Method according to claim 1, the graphic superimpositions of the declinations of the types of symbols being associated with predefined visual rankings and the step consisting in determining one or more graphic declinations of the types of graphic symbols comprising the step consisting in maximizing the sum of the rankings associated with the superimpositions of the determined graphic declinations.

4. Method according to claim 1, the step consisting in adjusting the display comprising a step consisting in modifying the type and/or the number of graphic symbols.

5. Method according to claim 1, the step consisting in adjusting the display comprising the steps consisting in eliminating and/or in superimposing one or more types or graphic declinations of the symbols displayed.

6. Method according to one of the preceding claims, further comprising a step consisting in receiving at least one value associated with the physiological state (714) of the pilot of the aircraft and in determining one or more graphic declinations of the types of graphic symbols and/or adjusting the display as a function of the physiological state of the pilot.

7. Method according to claim 1, the adjustment of the display being deactivated on request.

8. Computer program product, comprising code instructions making it possible to perform the steps of the method according to any one of claims 1 to 8, when said program is run on a computer.

9. System comprising means for implementing the steps of the method according to any one of claims 1 to 7, comprising at least one display screen chosen from a flight screen PFD and/or a navigation screen ND/VD and/or a multifunction screen MFD and/or one or more display screens of an electronic flight bag.

10. System according to claim 9, comprising means for acquiring images of one or more display screens.

11. System according to one of claims 9 to 10, comprising means for monitoring the physiology of the pilot of the aircraft.

12. System according to one of claims 9 to 11, comprising a device for tracking the gaze of the pilot.

13. System according to one of claims 9 to 12, comprising augmented reality and/or virtual reality means.
